(19) Europäisches Patentamt
European Patent Office
Office européen des brevets

(11) **EP 3 293 067 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
***B60T 8/1755*** *(2006.01)*

(21) Anmeldenummer: **17184742.9**

(22) Anmeldetag: **03.08.2017**

(54) **VERFAHREN ZUR AUFPRÄGUNG VON HAPTISCHEN INFORMATIONSRÜCKMELDUNGEN AUF EIN BREMSPEDAL**

METHOD FOR APPLYING HAPTIC INFORMATION FEEDBACK TO A BRAKE PEDAL

PROCÉDÉ DE CONFÉRENCE DE RETOUR D'INFORMATIONS HAPTIQUE À UN PÉDALE DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2016 DE 102016217144**

(43) Veröffentlichungstag der Anmeldung:
**14.03.2018 Patentblatt 2018/11**

(73) Patentinhaber: **AUDI AG**
**85045 Ingolstadt (DE)**

(72) Erfinder: **Brok, Tobias**
**85092 Kösching (DE)**

(56) Entgegenhaltungen:
**WO-A1-2004/085220        DE-A1- 10 262 003**
**DE-A1-102007 045 292    DE-A1-102013 204 778**

EP 3 293 067 B1

## Beschreibung

Die Erfindung betrifft ein Verfahren zur haptischen Informationsrückmeldung auf ein Bremspedal eines Kraftfahrzeugs gemäß der im Oberbegriff des Patentanspruches 1 angegebenen Art.

Verfahren zur haptischen Informationsrückmeldung auf ein Bremspedal eines Kraftfahrzeugs sind aus dem Stand der Technik hinreichend bekannt. Lediglich beispielhaft wird auf die DE 102 62 003 B4 und DE 10 2013 224 313 A1 verwiesen. Die aus dem Stand der Technik bekannten Verfahren zur haptischen Informationsrückmeldung zeichnen sich insbesondere dadurch aus, dass einem Fahrer eines Kraftfahrzeugs im Falle einer kritischen Fahrsituation ein aufgrund der kritischen Fahrsituation bedingtes Ansprechen eines Assistenzsystems, wie z.B. Eingriff eines Antiblockiersystems (ABS), mitgeteilt wird.

Ein gattungsgemäßes Verfahren zur Aufprägung von haptischen Informationsrückmeldungen auf ein Bremspedal ist aus der WO 2004/085220 A1 bekannt.

Der Erfindung liegt die Aufgabe zu Grunde, ein Verfahren zur Aufprägung von haptischen Informationsrückmeldungen auf ein Bremspedal derart weiterzubilden, dass eine verbesserte Fahrsicherheit gewährleistet ist.

Diese Aufgabe wird durch die Merkmale des Patentanspruches 1 gelöst.

Die Unteransprüche bilden vorteilhafte Weiterbildungen der Erfindung.

Das Verfahren zur haptischen Informationsrückmeldung auf ein Bremspedal eines Kraftfahrzeugs zeichnet sich dadurch aus, dass ein die aktuelle Fahrsituation beschreibender aktueller Stabilitätsindex mit einem hinterlegten kritischen Stabilitätsindex verglichen wird, wobei eine haptische Informationsrückmeldung auf das Bremspedal des Kraftfahrzeugs aufgeprägt wird, wenn das Verhältnis aus

$$\frac{\text{aktueller Stabilitätsindex}}{\text{kritischer Stabilitätsindes}}$$ einen vorher festgelegten Grenzwert überschreitet.

Das hat den Effekt, dass aufgrund des Vergleichs des aktuellen Stabilitätsindex mit dem hinterlegten kritischen Stabilitätsindex, einem Fahrer des Kraftfahrzeugs bereits vor Erreichen der physikalischen Grenzen der Fahrdynamik, eine drohende Instabilität des Kraftfahrzeugs am Bremspedal angezeigt wird. Dies erweist sich als besonders vorteilhaft, da nunmehr der Fahrer eine "proaktive" Rückmeldung erhält, die ihn in die Lage versetzt, bei Bedarf frühzeitig entsprechende Gegenmaßnahmen zu ergreifen, so dass die physikalischen Grenzen der Fahrdynamik nicht ausgereizt werden und damit eine erhöhte Verkehrssicherheit gewährleistet ist.

Erfindungsgemäß ist vorgesehen, dass die haptische Informationsrückmeldung mit zunehmender Annäherung des aktuellen Stabilitätsindex an den hinterlegten kritischen Stabilitätsindex kontinuierlich verstärkt wird. Durch die kontinuierliche Verstärkung der haptischen Informationsrückmeldung wird für den Fahrer eine zusätzliche Information zur Verfügung gestellt, nämlich die Information, dass er sich dem physikalischen Grenzbereich der Fahrdynamik annähert. Dies hat den Effekt, dass z.B. einem sportlichen Fahrer die Möglichkeit eines "Herantastens" an die physikalischen Grenzen der Fahrdynamik seines Kraftfahrzeugs ermöglicht wird.

Vorzugsweise wird dabei der aktuelle Stabilitätsindex von einem elektronischen Stabilitätsprogramm (ESP) zur Verfügung gestellt.

Alternativ ist denkbar, dass der aktuelle Stabilitätsindex unter Nutzung der im Bremssystem und Kraftfahrzeug vorhandenen Sensoren zur Verfügung gestellten Daten wie z.B. Druck im Bremssystem, Temperatur im Bremssystem, Beschleunigung, Raddrehzahl, Gieren, Wanken, Nicken, Querbeschleunigung und/oder GPS-Daten ermittelt wird.

Eine erste Ausführungsform sieht vor, dass das Kraftfahrzeug ein Bremssystem mit einem über ein Steuergerät an steuerbaren und mit dem Bremspedal in Wirkverbindung stehenden Aktuator aufweist, wobei die haptische Informationsrückmeldung auf das Bremspedal mittels des Aktuators aufgeprägt wird.

Eine weitere Ausführungsform sieht vor, dass das Kraftfahrzeug im Bremssystem einen über ein Steuergerät steuerbaren elektromechanischen Bremskraftverstärker aufweist, wobei die haptische Informationsrückmeldung auf das Bremspedal mittels einer intermittierenden Bestromung des elektromechanischen Bremskraftverstärkers des Bremssystems des Kraftfahrzeugs aufgeprägt wird.

Gemäß einer weiteren Ausführungsform ist vorgesehen, dass das Kraftfahrzeug ein brake-by-wire-Bremssystem mit hydraulischer Rückfallebene und einen über ein Steuergerät steuerbaren Pedalsimulator aufweist, wobei die haptische Informationsrückmeldung auf das Bremspedal mittels Ventilansteuerung in der hydraulischen Rückfallebene aufgeprägt wird.

Vorzugsweise erfolgt dabei die haptische Informationsrückmeldung in Form einer auf das Bremspedal aufgeprägte Schwingung bzw. Vibration.

Eine weitere vorteilhafte Ausführungsform sieht vor, dass die kontinuierliche Verstärkung der haptischen Rückmeldung durch eine kontinuierliche Zunahme der Frequenz und/oder der Amplitude der Schwingung erfolgt.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

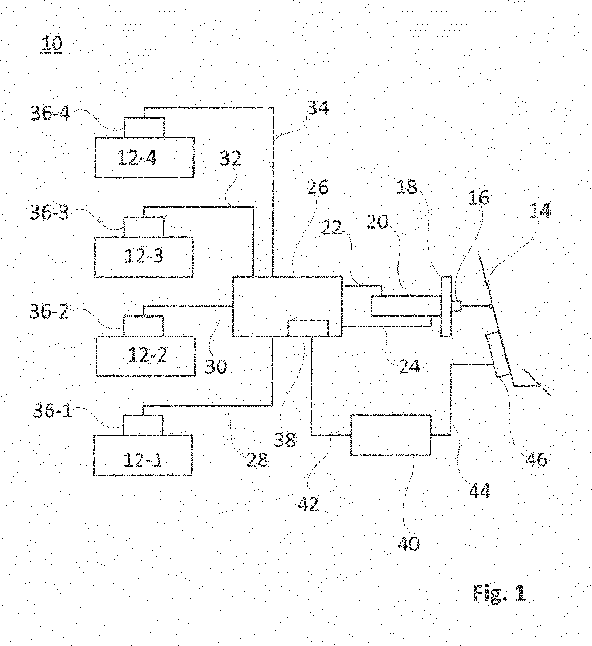

Fig. 1 eine schematische Darstellung einer Bremsanlage eines Kraftfahrzeugs.

Fig. 1 zeigt ein insgesamt mit der Bezugsziffer 10 bezeichnetes Bremssystem für die Räder 12-1 bis 12-4 eines Kraftfahrzeugs.

Das Bremssystem 10 ist vorliegend als ein hydraulisches Zweikreis-Bremssystem ausgeführt und umfasst in bekannter Art und Weise ein Bremspedal 14, einen Sensor 16 zur Erfassung eines Bremswunsches des Fahrers, einen Bremskraftverstärker 18 sowie einen Tandemhauptbremszylinder 20.

Der Tandemhauptbremszylinder 20 steht über eine erste und zweite Hydraulikleitung 22, 24 mit einem Hydraulikaggregat 26 in Wirkverbindung, welches seinerseits über Hydraulikleitungen 28, 30, 32, 34 mit den den Rädern 12-1, 12-2, 12-3 und 12-4 jeweils zugeordneten Bremszylindern 36-1, 36-2, 36-3 und 36-4 verbunden ist. Das Hydraulikaggregat 26 weist mehrere, den Hydraulikleitungen 28, 30, 32, 34 zugeordnete, hier nicht dargestellte, Ventile sowie ein die Ventile der Hydraulikleitungen 28 30, 32, 34 steuerndes und/oder regelndes ESP-Steuergerät 38 auf.

Weiterhin umfasst das Bremssystem 10 eine Steuer-/Regeleinheit 40, die eingangsseitig über eine Steuerleitung 42 mit dem ESP-Steuergerät 38 und ausgangsseitig über eine Steuerleitung 44 mit einem dem Bremspedal 14 zugeordneten Aktuator 46 in Wirkverbindung steht. Über die Steuerleitung 42 wird der Regel-/Steuereinheit 40 vom ESP-Steuergerät 38 als eine Eingangsgröße ein die aktuelle Fahrsituation beschreibender aktueller Stabilitätsindex zur Verfügung gestellt.

In der Steuer-/Regelsteuereinheit 40 wird der aktuelle Stabilitätsindex mit einem hinterlegten kritischen Stabilitätsindex verglichen. Ergibt der Vergleich, dass das Verhältnis aus aktuellem Stabilitätsindex und kritischem Stabilitätsindex einen vorher festgelegten Grenzwert überschreitet, erfolgt über die Steuerleitung 44 eine Ansteuerung des Aktuators 46.

Der Aktuator 46 bewirkt eine Schwingung des Bremspedals 14, so dass der Fahrer proaktiv die haptische Informationsrückmeldung erhält, dass der Fahrer dabei ist, die Grenzen der physikalischen Fahrdynamik auszureizen.

**Patentansprüche**

1. Verfahren zur haptischen Informationsrückmeldung auf ein Bremspedal (14) eines Kraftfahrzeugs, wobei ein die aktuelle Fahrsituation beschreibender aktueller Stabilitätsindex mit einem hinterlegten kritischen Stabilitätsindex verglichen wird, **dadurch gekennzeichnet, dass** eine haptische Informationsrückmeldung auf das Bremspedal (14) des Kraftfahrzeugs aufgeprägt wird, wenn das Verhältnis aus

$$\frac{\text{aktueller Stabilitätsindex}}{\text{kritischer Stabilitätsindes}}$$ einen vorher festgelegten Grenzwert überschreitet, wobei die haptische Rückmeldung mit zunehmender Annäherung des aktuellen Stabilitätsindex an den hinterlegten kritischen Stabilitätsindex kontinuierlich verstärkt wird.

2. Verfahren nach Anspruch 1, **dadurch gekennzeichnet, dass** der aktuelle Stabilitätsindex vom Elektronischen Stabilitätsprogramm (ESP) des Bremssystems (10) des Kraftfahrzeugs zur Verfügung gestellt wird.

3. Verfahren nach Anspruch 1, **dadurch gekennzeichnet, dass** der aktuelle Stabilitätsindex unter Nutzung der im Bremssystem (10) und Kraftfahrzeug vorhandenen Sensoren zur Verfügung gestellten Daten Druck im Bremssystem, Temperatur im Bremssystem, Beschleunigung, Raddrehzahl, Gieren, Wanken, Nicken, Querbeschleunigung und/oder GPS ermittelt wird.

4. Verfahren nach einem der vorgenannten Ansprüche, wobei das Kraftfahrzeug ein Bremssystem (10) mit einem über ein Regel-/Steuergerät (40) ansteuerbaren und mit dem Bremspedal (14) in Wirkverbindung stehenden Aktuator (46) aufweist, **dadurch gekennzeichnet, dass** die haptische Informationsrückmeldung auf das Bremspedal mittels des Aktuators (46) aufgeprägt wird.

5. Verfahren nach einem der Ansprüche 1 bis 3, wobei das Kraftfahrzeug ein Bremssystem (10) einen über ein Steuergerät ansteuerbaren elektromechanischen Bremskraftverstärker aufweist, **dadurch gekennzeichnet, dass** die haptische Informationsrückmeldung auf das Bremspedal (14) mittels einer intermittierenden Bestromung des elektromechanischen Bremskraftverstärkers des Bremssystems des Kraftfahrzeugs aufgeprägt wird.

6. Verfahren nach einem der Ansprüche 1 bis 3, wobei das Kraftfahrzeug ein brake-by-wire-Bremssystem mit hydraulischer Rückfallebene und einen einem über ein Steuergerät ansteuerbaren Pedalsimulator aufweist, **dadurch gekennzeichnet, dass** die haptische Informationsrückmeldung auf das Bremspedal (14) mittels Ventilansteuerungen in der hydraulischen Rückfallebene aufgeprägt wird.

7. Verfahren nach einem der vorgenannten Ansprüche, **dadurch gekennzeichnet, dass** die haptische Rückmeldung in Form von einer auf das Bremspedal (14) aufgeprägte Schwingung erfolgt.

8. Verfahren nach Anspruch 7, **dadurch gekennzeichnet, dass** die kontinuierliche Verstärkung der haptischen Rückmeldung durch eine kontinuierliche Zunahme der Frequenz und/oder der Amplitude der Schwingung erfolgt.

## Claims

1. Method for haptic feedback on a brake pedal (14) of a motor vehicle, whereby a current stability index describing the current driving situation is compared with a stored critical stability index, **characterised in that** a haptic feedback is imprinted on the brake pedal (14) of the motor vehicle when the ratio derived

   from $\dfrac{\text{current stability index}}{\text{critical stability index}}$ exceeds a previously defined limit value, whereby the haptic feedback is continuously boosted as the current stability index comes increasingly close to the stored critical stability index.

2. Method according to claim 1, **characterised in that** the current stability index is provided by the Electronic Stability Programme (ESP) of the braking system (10) of the motor vehicle.

3. Method according to claim 1, **characterised in that** the current stability index is determined using the data provided by sensors present in the braking system (10) and vehicle, namely pressure in the braking system, temperature in the braking system, acceleration, rotational speed of the wheels, yaw, roll, pitch, lateral acceleration and/or GPS.

4. Method according to any of the above claims, whereby the motor vehicle has a braking system (10) with an actuator (46) configured to activate by way of a regulating/control device (40) and operatively connected with the brake pedal (14), **characterised in that** the haptic feedback is imprinted on the brake pedal by means of the actuator (46).

5. Method according to any of claims 1 to 3, whereby the motor vehicle has an electromechanical brake booster in the braking system (10) configured to activate by way of a control device, **characterised in that** the haptic feedback is imprinted on the brake pedal (14) my means of an intermittent powering of the electromechanical brake booster of the braking system of the motor vehicle.

6. Method according to any of claims 1 to 3, whereby the motor vehicle has a brake-by-wire braking system with hydraulic fallback level and a pedal simulator activated by way of a control device, **characterised in that** the haptic feedback is imprinted on the brake pedal (14) by means of valve actuations in the hydraulic fallback level.

7. Method according to any of the above claims, **characterised in that** the haptic feedback comes about in the form of an oscillation imprinted on the brake pedal (14).

8. Method according to claim 7, **characterised in that** the continuous boosting of the haptic feedback comes about through a continuous increase in the frequency and/or the amplitude of the oscillation.

## Revendications

1. Procédé de retour d'informations haptique à une pédale de freinage (14) d'un véhicule automobile, dans lequel un index de stabilité actuel décrivant la situation de déplacement actuelle est comparé avec un index de stabilité critique enregistré, **caractérisé en ce qu'**un retour d'informations haptique est appliqué à la pédale de freinage (14) du véhicule automobile, lorsque le rapport entre

   $\dfrac{\text{index de stabilité actuel}}{\text{index de stabilité critique}}$ dépasse une valeur limite déterminée au préalable, dans lequel le retour haptique est renforcé en continu à mesure que l'index de stabilité actuel se rapproche de l'index de stabilité critique enregistré.

2. Procédé selon la revendication 1, **caractérisé en ce que** l'index de stabilité actuel est mis à disposition par le programme de stabilité électronique (ESP) du système de freinage (10) du véhicule automobile.

3. Procédé selon la revendication 1, **caractérisé en ce que** l'index de stabilité actuel est déterminé en utilisant les données, mises à disposition des capteurs présents dans le système de freinage (10) et le véhicule automobile, de pression dans le système de freinage, température dans le système de freinage, accélération, vitesse de rotation de roue, lacet, roulis, tangage, accélération transversale et/ou GPS.

4. Procédé selon l'une des revendications précédentes, dans lequel le véhicule automobile présente un système de freinage (10) avec un actionneur (46) commandable par un appareil de régulation et de commande (40) et se trouvant en liaison active avec la pédale de freinage (14), **caractérisé en ce que** le retour d'informations haptique est appliqué à la pédale de freinage au moyen de l'actionneur (46).

5. Procédé selon l'une des revendications 1 à 3, dans lequel le véhicule automobile présente un système de freinage (10), un amplificateur de force de freinage électromécanique commandable par un appareil de commande, **caractérisé en ce que** le retour d'informations haptique est appliqué à la pédale de freinage (14) au moyen d'une alimentation en courant intermittente de l'amplificateur de force de freinage électromécanique du système de freinage du véhicule automobile.

6. Procédé selon l'une des revendications 1 à 3, dans lequel le véhicule automobile présente un système de freinage frein par fil avec un plan de repli hydraulique et un simulateur de pédale commandable par un appareil de commande, **caractérisé en ce que** le retour d'informations haptique est appliqué à la pédale de freinage (14) au moyen de commandes de soupape dans le plan de repli hydraulique.

7. Procédé selon l'une des revendications précédentes, **caractérisé en ce que** le retour haptique est effectué sous la forme d'une oscillation appliquée à la pédale de frein (14).

8. Procédé selon la revendication 7, **caractérisé en ce que** l'amplification continue du retour haptique est effectuée par une augmentation continue de la fréquence et/ou de l'amplitude de l'oscillation.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10262003 B4
- DE 102013224313 A1
- WO 2004085220 A1